# EUROPEAN PATENT APPLICATION

(11) **EP 4 792 915 A1**
(43) Date of publication of application: **19.08.2026**
(21) Application number: 24901058.8
(22) Date of filing: 04.12.2024
(51) Int. Cl.: B01D 53/04, B01D 53/30, B01D 53/96

(54) **GASEOUS MATERIAL CONCENTRATION DEVICE AND GASEOUS MATERIAL TREATMENT DEVICE COMPRISING SAME**

(30) Priority: 07.12.2023 KR 20230177068; 14.12.2023 KR 20230181332
(71) Applicant: Enbion Inc., Daejeon 34026 (KR)
(72) Inventor: LEE, Hyun Jae, Daejeon 35228 (KR); LEE, Seung Kil, Yongin-si Gyeonggi-do 16998 (KR); PARK, Min Soo, Daejeon 35272 (KR); LEE, Sanggi, Daejeon 34048 (KR); CHO, Min Whee, Cheongju-si Chungcheongbuk-do 28124 (KR)
(74) Representative: Mammel und Maser Patentanwälte PartG mbB
(86) International application number: PCT/KR2024/019708
(87) International publication number: WO 2025/121872

(57) **Abstract**

The present invention relates to a gaseous material treatment device, which concentrates and desorbs a low-concentration gaseous material by means of a rotary rotor so as to condense, recover and remove same. The present invention provides the gaseous material concentration device comprising: an adsorption member having a plurality of functional areas for adsorbing and concentrating/desorbing a gaseous material in a discharge gas discharged from a discharge source; and a driving unit for rotating the adsorption member relative to the gaseous material, the functional areas of the adsorption member including an adsorption area, a desorption area, a primary cooling area and a secondary cooling area, wherein the concentration device comprises a discharge gas flow path allowing inflow from the discharge source to the adsorption area, a desorption gas flow path for discharging the concentrated gas from the desorption area, a first recirculation flow path branched from the desorption gas flow path so as to pass through the primary cooling area, and a secondary cooling gas flow path passing through the secondary cooling area, and a part of the concentrated gas in the desorption gas flow path is joined in the discharge gas flow path through a second recirculation flow path.

## Description

### [Technical Field]

The present disclosure relates to an apparatus for concentrating and treating gaseous substances such as odor, carbon dioxide, and volatile organic compounds and, more particularly, to a gaseous substance treatment apparatus configured to highly concentrate and desorb, using a rotor, low-concentration gaseous substances discharged from, for example, an air purifier, a printing process, a coating process, a semiconductor process, a carbon dioxide emission facility, or an odor facility, and to condense, recover, and remove the gaseous substances.

### [Background Art]

As legal regulations on the atmospheric environment are being strengthened, in the case of gaseous substances simultaneously containing volatile organic compounds, it is very difficult to perform oxidation treatment using heat or a catalyst. In general, in the case of such gaseous substances, since the amount of combustible components in the gaseous substances is small, an oxidation system using a high temperature of 800°C or higher or a catalyst at 300°C or higher is uneconomical due to a large amount of additional energy consumption. Accordingly, as a recent technology, a regenerative combustion method for treating low-concentration volatile organic compounds by recovering heat at a heat recovery rate of 95% or more using a heat storage material has been widely used. The regenerative combustion method is an oxidation method of oxidizing volatile organic compounds at a high temperature while maintaining an oxidation temperature of 800°C or higher, and in general, when a temperature increase caused by an oxidation calorific value of the volatile organic compounds in the gaseous substances is 40 to 80°C per unit cubic meter of gas, operation may be performed without additional fuel supply. However, when the temperature increase is 40°C or less per unit cubic meter of gas, additional fuel is required. In the regenerative combustion method, a regenerative combustion method using a catalyst is referred to as a regenerative catalytic combustion method, and since the combustion temperature may be lowered to 300 to 450°C, treatment may be performed more economically. However, even in this case, when the calorific value of the volatile organic compounds contained in the gaseous substances per unit cubic meter of gas does not reach 15 to 30°C, a large amount of additional energy is consumed. In an actual coating process, there are many environments in which gaseous substances containing odor and volatile organic compounds are discharged in a large air volume while the volatile organic compounds are discharged at a low concentration. Therefore, in order to combust and oxidize low-concentration odor and volatile organic compounds, additional fuel has to be supplied, and thus there is a disadvantage in that maintenance cost is high due to increased energy consumption.

As a conventional method for treating low-concentration gaseous substances, Japanese Unexamined Patent Publication No. 1997-173758 provides a high-boiling-point solvent recovery apparatus including: a honeycomb-structured rotor configured to carry an adsorbent; a separator configured to divide a region near a cross-section of the rotor into an adsorption region and a desorption region; blowing means configured to supply solvent-containing air having a boiling point of 150 to 300°C to the adsorption region so as to discharge a portion of purified gas flowing out from an opposite cross-section of the rotor into the atmosphere and to supply a remainder thereof to the desorption region; heating means configured to heat the purified gas; cooling means configured to separate concentrated solvent gas into a liquefied recovered material and a cooled lean gas; and returning means configured to return the cooled lean gas as a raw material. This apparatus may concentrate the gaseous substances by 5 to 15 times. Such conventional adsorption concentration means includes a honeycomb-shaped ceramic support coated with an adsorbent such as zeolite, activated carbon, or silica, and the concentration ratio is determined according to an amount of adsorption of the substances.

Meanwhile, Korean Registered Patent No. 2383095 provides a gaseous substance concentration apparatus including an adsorbing member configured to form a plurality of functional regions for adsorbing, concentrating, and desorbing contaminant components in a gas, and a drive unit configured to relatively rotate the adsorbing member with respect to the gaseous substances, wherein a portion of concentrated gas in a desorption gas flow path flows into the adsorption region through a recirculation flow path. However, although this method has an advantage in that, by introducing the concentrated recirculation gas into the adsorption region, the gaseous substances may be concentrated to a high concentration and thereby the capacity of a post-treatment system may be reduced, efficiency may decrease because more adsorbing members are required to re-adsorb contaminant components concentrated to a high concentration, and additional energy is required to desorb contaminant components adsorbed at a high concentration.

### [Disclosure]

### [Technical Problem]

In order to solve the problems of the related art, the present disclosure provides a gaseous substance treatment system capable of reducing energy consumption and effectively removing gaseous substances by highly concentrating gaseous substances discharged from an emission source that contains and discharges low-concentration gaseous substances and using the highly concentrated gaseous substances in combustion, recovery, and condensation treatment units.

In addition, the present disclosure provides a gaseous substance treatment system that suppresses an increase in desorption energy while highly concentrating gaseous substances when using a concentration unit configured with a plurality of functional regions including an adsorption region, a desorption region, and a cooling region.

In addition, the present disclosure provides a gaseous substance treatment system capable of highly concentrating gaseous substances by minimizing re-adsorption in the adsorption region when using a concentration unit configured with a plurality of functional regions including an adsorption region, a desorption region, and a cooling region.

In addition, the present disclosure provides a gaseous substance treatment system capable of suppressing an increase in desorption energy while highly concentrating gaseous substances by providing a plurality of cooling regions as functional regions.

In addition, the present disclosure provides a gaseous substance treatment system capable of highly concentrating gaseous substances by providing a plurality of cooling regions as functional regions and by minimizing re-adsorption in an adsorption region.

Furthermore, the present disclosure provides a gaseous substance treatment system capable of appropriately adjusting a recirculation rate required for high-concentration concentration, and stably supplying a flow rate, concentration, and temperature of a cooling flow, a flow rate and concentration of a desorption flow, and energy required for desorption in consideration of safety and convenience of an operator.

### [Technical Solution]

In view of the foregoing, the present disclosure provides a gaseous substance concentration apparatus for concentrating gaseous substances, the gaseous substance concentration apparatus including an adsorbing member configured to form a plurality of functional regions for adsorbing, concentrating, and desorbing gaseous substances in exhaust gas discharged from an emission source. The plurality of functional regions of the adsorbing member include an adsorption region, a desorption region, a primary cooling region, and a secondary cooling region. The gaseous substance concentration apparatus includes an exhaust gas flow path through which the exhaust gas is introduced from the emission source into the adsorption region, a desorption gas flow path through which concentrated gas is discharged from the desorption region, a first recirculation flow path branched from the desorption gas flow path and passing through the primary cooling region, and a secondary cooling gas flow path passing through the secondary cooling region, and wherein some of the concentrated gas in the desorption gas flow path is introduced into the primary cooling region through the first recirculation flow path.

At this time, some of the concentrated gas in the desorption gas flow path may merge into the exhaust gas flow path through a second recirculation flow path. In addition, simultaneously therewith or separately therefrom, some of the concentrated gas in the desorption gas flow path may merge, through a third recirculation flow path, into the desorption gas flow path through which desorption gas is introduced into the desorption region.

In the present disclosure, when a value obtained by dividing a flow rate of the concentrated gas branched into the first recirculation flow path by a flow rate of the concentrated gas in the desorption gas flow path is defined as a recirculation rate, the recirculation rate may be controlled according to a concentration of contaminant components in the exhaust gas introduced into the adsorption region.

In the present disclosure, at least one of the exhaust gas flow path, the desorption flow path, the recirculation flow path, and the exhaust flow path may include a concentration sensor.

In the present disclosure, the recirculation rate may be controlled according to a concentration of contaminant components measured by the concentration sensor.

In the present disclosure, the recirculation rate is 1 to 99.9%.

In the present disclosure, the gaseous substance concentration apparatus may include a desorption unit configured to heat a desorption gas flow supplied to the desorption region, and the desorption unit may heat a gas flow flowing through the recirculation gas flow path.

In the present disclosure, the gaseous substance concentration apparatus may include a desorption unit configured to heat a desorption gas flow supplied to the desorption region, and the desorption unit may heat a gas flow flowing through the secondary cooling gas flow path.

In the present disclosure, the gas flow flowing through the secondary cooling gas flow path may include external air, exhaust gas, or purified exhaust gas.

In the present disclosure, the desorption gas flow path may include a cooling unit.

In addition, the present disclosure may further include a concentrated gas treatment unit, and the concentrated gas treatment unit may be a condensation recovery apparatus through cooling and pressurization, a concentration recovery apparatus using an adsorbent, or an oxidation apparatus configured to remove contaminant gas by oxidation.

In the present disclosure, a treated gas recovered by the condensation recovery apparatus may be supplied to the adsorption region or the cooling region of the adsorbing member.

### [Advantageous Effects]

According to the present disclosure, by using a concentration unit including a plurality of functional regions to adsorb low-concentration gaseous substances and recirculating some of the concentrated gas desorbed using a heat source, the low-concentration gaseous substances may be concentrated to a high concentration and used in combustion, recovery, and condensation treatment units. As a result, energy consumption may be reduced and the gaseous substances may be effectively removed.

According to the present disclosure, even though gaseous substances are concentrated by recirculating some of the desorption gas adsorbed to and desorbed from the concentration unit, an increase in energy required for desorption may be minimized.

In addition, according to the present disclosure, a concentration ratio of gaseous substances may be improved by recirculating some of the high-concentration gas adsorbed to and desorbed from the concentration unit, while concentrating the gaseous substances to a high concentration without re-adsorption in the adsorption region.

Accordingly, gaseous substances may be treated more economically by concentrating the gaseous substances to a concentration factor close to 300 times and minimizing the size of a final treatment unit.

### [Description of Drawings]

FIG. 1 is a view schematically illustrating a concentration apparatus configured to highly concentrate gaseous substances and treat the gaseous substances according to an embodiment of the present disclosure.
FIG. 2 is a view conceptually illustrating that a cross-section of an adsorbing member of the concentration apparatus is divided into and partitioned by a plurality of functional regions.
FIG. 3 is a view schematically illustrating a gaseous substance treatment apparatus according to a first embodiment of the present disclosure.
FIG. 4 is a view schematically illustrating a gaseous substance treatment apparatus according to a second embodiment of the present disclosure.
FIG. 5 is a view schematically illustrating a gaseous substance treatment apparatus according to a third embodiment of the present disclosure.
FIG. 6 is a view schematically illustrating a gaseous substance treatment apparatus according to a fourth embodiment of the present disclosure.

### [Mode for Invention]

The present disclosure will be described in detail below with reference to the accompanying drawings.

Hereinafter, embodiments of the present disclosure will be described in detail with reference to the accompanying drawings. In describing the present disclosure, detailed descriptions of related known configurations or functions will be omitted when it is determined that the detailed descriptions may obscure the gist of the present disclosure.

Hereinafter, in the specification of the present disclosure, the term "gaseous substance" is used as a term referring not only to volatile organic compound components such as organic solvents, for example, toluene and N-methyl-2-pyrrolidone (NMP), but also to contaminant components such as odor components, and harmful components such as CO₂ and NOₓ. In addition, in the specification of the present disclosure, the term "gaseous substance" may include water vapor.

Accordingly, in the specification of the present disclosure, components of a gaseous substance may vary depending on the type of the gaseous substance, and the gaseous substance may refer only to odor components, may refer to gaseous substance components, or may refer to both odor components and other harmful components.

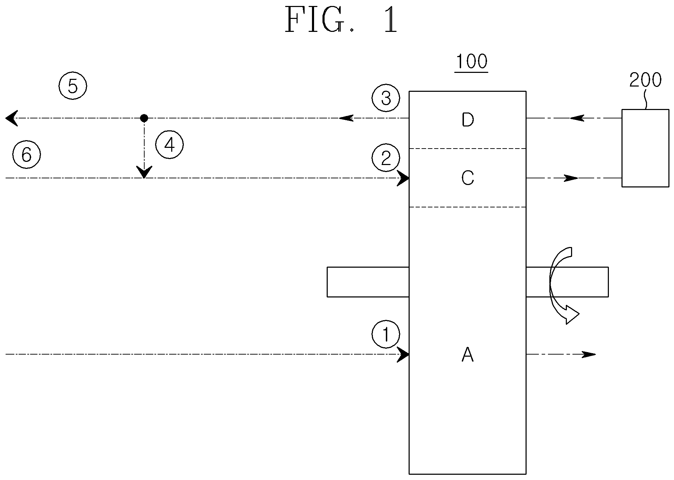

FIG. 1 is a side view schematically illustrating a concentration apparatus according to an embodiment of the present disclosure.

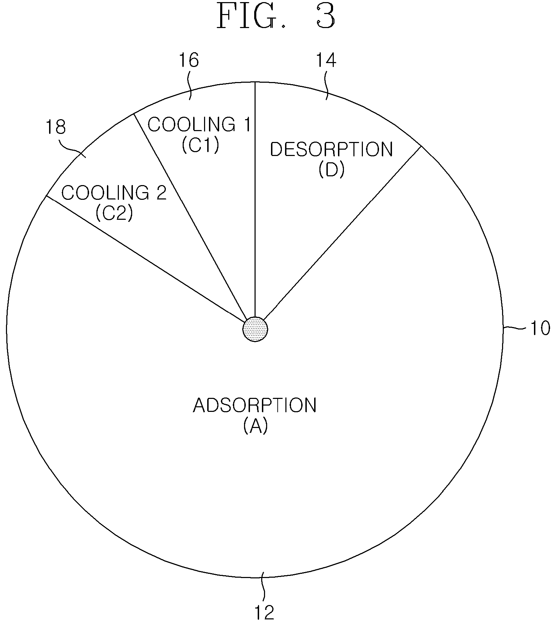

Referring to FIG. 1, the concentration apparatus 100 may include an adsorbing member 10 (see FIG. 3) configured to form a plurality of functional regions configured for adsorbing, concentrating, and desorbing gaseous substances, and a drive unit configured to relatively rotate the adsorbing member with respect to the gaseous substances.

The concentration apparatus 100 provides a plurality of gas flow paths. As illustrated, appropriate flow paths are provided so that, for example, an exhaust gas flow ① from a contamination source (or an emission source), passing through the adsorbing member therein, a desorption gas flow ③ in which adsorbed gaseous substances are desorbed, and a cooling gas flow ② for cooling a region of the adsorbing member heated after desorption are provided. In addition, appropriate flow paths are provided so that a portion of the desorption gas flow ③ is branched into a recirculation flow ④ and merged into the cooling gas flow ②, and another portion thereof is discharged as a discharge flow ⑤.

In the present disclosure, various sources may be used as the supply source ⑥ of the cooling gas. For example, external air, exhaust gas from a contamination source, or purified gas may be used. Here, the external air may include clean atmospheric air, air having a controlled oxygen concentration, or, for gaseous combustible substances, an inert gas such as nitrogen, carbon dioxide, or helium.

In addition, in the present disclosure, the concentration apparatus 100 may be provided with appropriate gaseous substance transfer units, sensors, gas inlets, gas outlets, and a housing. In addition, appropriate valves, ducts, and blowing units for branching the recirculation flow and the discharge flow may be provided. In addition, in the present disclosure, a plurality of flow paths passing through the adsorbing member are separated and/or partitioned by appropriate sealing units so that gas flows between the plurality of flow paths do not interfere with each other. For example, gas flows in the respective flow paths may be separated and partitioned by disposing a silicone resin, a heat-resistant polymer, or a metal or ceramic material between the housing and the adsorbing member.

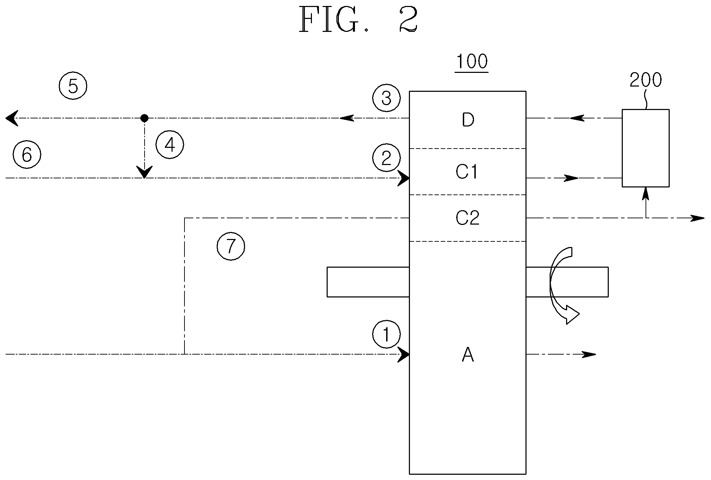

FIG. 2 conceptually illustrates that an adsorption region A, a cooling region C, and a desorption region D of the concentration apparatus are separately partitioned.

Meanwhile, as illustrated in FIG. 1, the cooling gas flow ② passing through the cooling region C is additionally heated through a desorption unit 200 and then introduced into the desorption region D. The desorption unit 200 of the present disclosure may be implemented as part of the concentration apparatus 100, or may be implemented as a separate component.

FIG. 1 illustrates exemplary directions of gas flows in the gas flow paths ①, ②, and ③, and the present disclosure is, of course, not limited thereto. At least one of the gas flows in the respective flow paths may have a direction opposite to that illustrated.

The concentration apparatus of FIG. 1 may use, as an adsorption/concentration unit for gaseous substances, a cylindrical adsorbing member 10 as illustrated in FIG. 2.

The adsorbing member 10 may be formed of an appropriate material having heat storage properties and gas adsorption properties. In general, the adsorbing member may be formed by coating an adsorbent having excellent adsorption capability on a base material formed by bending a ceramic fiber, a glass fiber, or an aluminum or stainless-steel plate. Of course, the present disclosure is not limited thereto, and as the adsorbing member 10, one material selected from the group consisting of zeolite such as 3A, 4A, USY, or ZSM-5, a metal organic framework (MOF), activated carbon, activated carbon fiber, a carbon nanotube (CNT), graphene, alumina, silica, and a polymer resin, or a composite material of selected materials, may be used.

The adsorbing member may also be configured as a packed type using spherical adsorbents, amorphous adsorbents, cylindrical adsorbents, and honeycomb-type adsorbents, or a honeycomb-shaped adsorbing member having improved air permeability and contact area may be used by forming a laminated adsorbent using bent, extruded, and sheet-type adsorbents.

The adsorbing member may be configured as a multi-stage adsorbing member. For example, the adsorbing member may include an upstream member facing the exhaust gas flow and a downstream member adjacent thereto, and the upstream member and the downstream member may be formed of different materials. For example, the upstream member may include one material selected from the group consisting of silica, zeolite 3A, zeolite 4A, and diatomite, which are hydrophilic adsorbents that readily adsorb moisture, and the downstream member may include, as a main component, hydrophobic zeolite having a Si/Al molar ratio of 15 or more among zeolites (e.g., USY and ZSM-5) that have a low relative adsorption capability for moisture and readily adsorb volatile organic compounds.

FIG. 3 is a view schematically illustrating a cross-section of the adsorbing member 10 of the present disclosure.

In the present disclosure, the plurality of regions may be defined based on an area in a direction substantially perpendicular to gas flows flowing through the flow paths ①, ②, and ③ described with reference to FIG. 1. For example, the area of each region may be defined by a cross-sectional area perpendicular to the axial direction of the concentration apparatus.

The plurality of regions may include, for example, functional regions such as an adsorption region 12, a desorption region 14, and a cooling region 16, 18.

In the adsorbing member of the present disclosure, areas occupied by the adsorption region 12, the desorption region 14, and the cooling region 16, 18 may be appropriately partitioned. In general, the area of the adsorption region 12 may preferably occupy 40% to 90% of the entire area of the adsorbing member 10. Accordingly, the adsorption region 12 may have a larger area than the desorption region 14 or the cooling region 16, 18.

In general, the adsorption region 12 and the desorption region 14 may be configured to have the same area, the desorption region 14 may be designed to have the same area as the cooling region 16, 18, or the desorption region 14 may be designed to be smaller than the cooling region 16, 18, and *vice versa*.

However, when the desorption region is larger than the cooling region and the cooling region is too small, adsorption efficiency may be reduced in the subsequent adsorption region due to insufficient cooling, and recovery of energy applied to the desorption region may be reduced, which may result in an increase in energy required for a desorption unit configured to heat the cooling gas flow passing through the cooling region.

Hereinafter, an operating method for increasing heat energy recovery will be described, but the present disclosure is not limited thereto and may be appropriately controlled depending on an operating environment.

Preferably, in the present disclosure, the relationship of adsorption region area > cooling region area ≥ desorption region area may be satisfied. Specifically, in the present disclosure, the ratio of cooling region area/desorption region area may be 1.05 or more, 1.1 or more, or 1.2 or more. In addition, the upper limit of the area ratio may be limited to 1.5, 2.0, or 3.0. An excessive area ratio exceeding the upper limit is disadvantageous from the viewpoint of economic efficiency because the excessive area ratio does not substantially affect an increase in energy recovery efficiency.

FIG. 3 illustrates that the cooling region is divided into a primary cooling region 16 and a secondary cooling region 18.

In the present disclosure, both the primary cooling region and the secondary cooling region perform a cooling function. In the present disclosure, separation of the cooling regions is based on the fact that there is a temperature difference between gases passing through the respective cooling regions. A gas flow passing through the primary cooling region has a relatively higher temperature than a gas flow passing through the secondary cooling region.

In addition, in the present disclosure, the secondary cooling region may also perform a purge function. When a recirculation rate increases or when a temperature and concentration of concentrated gas discharged from the desorption region increase, the concentrated gas may be purged, and a region for cooling or recovering heat from the adsorbing member may be required. For this purpose, the secondary cooling region may be additionally provided. In this case, as the cooling gas introduced into the secondary cooling region, one gas selected from external air, exhaust gas, and purified exhaust gas, or a mixed gas thereof, may be used. Here, the external air may include clean atmospheric air, air having a controlled oxygen concentration, or, for gaseous combustible substances, an inert gas such as, for example, nitrogen, carbon dioxide, or helium.

In the present disclosure, during operation of the adsorbing member 10, the plurality of regions partitioned as, for example, the adsorption region 12, the desorption region 14, the primary cooling region 16, and the secondary cooling region 18 may be isolated or separated by sealing units so as to function as distinct regions.

FIG. 2 is a side view schematically illustrating a concentration apparatus including a two-stage cooling region according to another embodiment of the present disclosure.

Unlike FIG. 1, the concentration apparatus 100 additionally includes an appropriate flow path for a secondary cooling gas flow ⑦ flowing to a secondary cooling region C2. The secondary cooling gas flow ⑦ passing through the adsorbing member 10 may flow through a separate flow path separated from the primary cooling gas flow ②. Alternatively, the secondary cooling gas flow ⑦ passing through the adsorbing member 10 may, of course, merge with the primary cooling gas flow ② passing through the adsorbing member. A desorption unit may be installed on a flow path in which the primary cooling gas flow ② is present, and the desorption unit 200 may be installed at any position before the primary cooling gas flow ② and the secondary cooling gas flow ⑦ merge with each other or after the primary cooling gas flow ② and the secondary cooling gas flow ⑦ have merged with each other.

Although the secondary cooling gas flow ⑦ is branched from the exhaust gas flow ① and introduced into the secondary cooling region C2, the present disclosure is not limited thereto. As the secondary cooling gas flow, external air or purified gas may be used. A gas flow passing through the secondary cooling gas region C2 may be introduced into the desorption unit 200 and may merge with the primary cooling gas flow ②. Alternatively, some or all of the secondary cooling gas flow ⑦ may be supplied to a location other than the desorption unit 200.

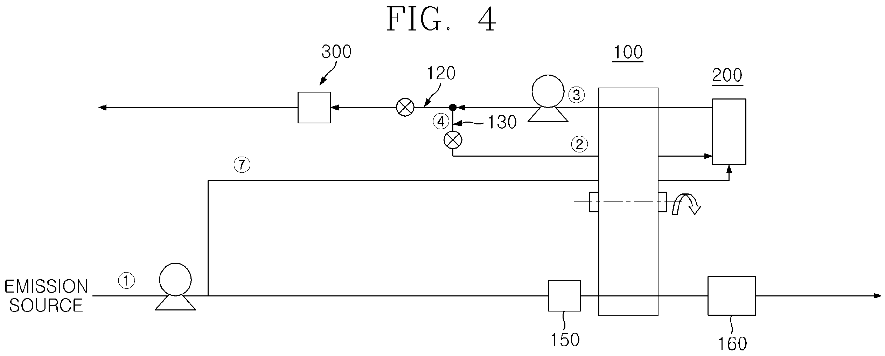

FIG. 4 is a view schematically illustrating an example of a gaseous substance treatment apparatus for highly concentrating gaseous substances from a low-concentration gaseous substance emission source according to an embodiment of the present disclosure.

Referring to FIG. 4, the gaseous substance treatment apparatus includes a concentration apparatus 100, a desorption unit 200, and a concentrated gas treatment unit 300.

Referring to FIG. 4, contaminant components or harmful components, that is, gaseous substances, contained in exhaust gas introduced from an emission source are adsorbed onto an adsorbent of the adsorbing member 10 of the concentration apparatus 100 while passing through the concentration apparatus 100. The concentration apparatus 100 is preferably a rotor-type adsorption concentration unit capable of adjusting a rotational speed according to the concentration of introduced gaseous substances. In this embodiment, the concentration apparatus 100 may rotate at a rotational speed of 2 to 20 rph. In the present disclosure, the rotational speed of the concentration apparatus is exemplary, and may be set differently depending on process circumstances or process conditions. In addition, in a rotor-type operating scheme, adsorption, cooling, and desorption may be repeatedly performed, and the rotation scheme of the rotor is not limited regardless of whether the rotor rotates continuously or intermittently.

As described above, gaseous substances contained in exhaust gas from an emission source are introduced into the concentration apparatus 100 and adsorbed onto the adsorbing member 10 in the adsorption region A. As the rotor rotates, the adsorbing member 10 having the gaseous substances adsorbed thereon enters the desorption region D, and the adsorbed gaseous substances are desorbed by desorption air. The flow rate of the desorption gas used in this process is lower than that of the exhaust gas introduced into the adsorption region. Preferably, the flow rate of the desorption gas and the flow rate of the adsorption gas are in a ratio of 1/3 to 1/30. Accordingly, the desorption gas may contain gaseous substances at a concentration 3 to 30 times higher than that of the adsorption gas. The ratio between the flow rate of the exhaust gas introduced into the adsorption region and the flow rate of the desorption gas may be controlled according to concentration by adjusting a desorption gas transfer unit. However, when the amount of the desorption gas is excessively reduced, desorption does not occur if desorption energy required for desorption of the gaseous substances cannot be delivered, and therefore the amount of the desorption gas should be appropriately controlled.

Meanwhile, in the present disclosure, the exhaust gas from the emission source may be used as cooling gas. In this case, as illustrated, some of the exhaust gas from the emission source is branched from the exhaust gas flow ①, passes through the secondary cooling region C2, and merges into the primary cooling gas flow ②. At this time, a merging point of the secondary cooling gas flow ⑦ may be located at the upstream end or downstream end of the desorption unit 200. Since the ratio of the secondary cooling gas flow ⑦ branched from the exhaust gas flow ① determines the content of contaminant components in the desorption gas, the ratio may define a concentration factor. For example, the ratio of exhaust gas used as the cooling gas may be determined based on the amount and recirculation rate of the desorption gas. The flow rate ratio of (exhaust gas flow rate)/(desorption gas flow rate) is not particularly limited, but should be an amount capable of providing energy required for desorption of the adsorbed gaseous substances. In general, a ratio of 3 to 30 is mainly used in the field, and when the recirculation rate is 50% (that is, when 50% of the desorption gas is recirculated as the cooling gas), the flow rate ratio of (exhaust gas flow rate)/(branched cooling gas flow rate) increases to 6 to 60.

The concentration apparatus of the present disclosure includes a desorption unit 200 configured to heat the desorption gas. In the present disclosure, as the desorption unit 200, a heating device such as a heater, a microwave, or plasma (or a plasma burner) may be used, or a vibration unit such as an ultrasonic vibrator may be used. Of course, the present disclosure is not limited thereto, and various desorption units may be used, but preferably, an electric heater, a burner, or hot air is used as the heating device. Here, when hot air is used, a method of directly introducing the hot air into the desorption gas flow or a method of transferring heat energy through an indirect heat exchanger may be used.

As described above with reference to FIG. 1, some of the desorbed desorption gas is branched and merged into the cooling gas flow. This branching mechanism may include a duct and a valve.

FIG. 4 illustrates an exhaust duct 120 and a recirculation duct 130 as an example of a branching mechanism for desorption gas. In the present disclosure, the exhaust duct 120 and the recirculation duct 130 may include a flow rate control unit such as, for example, a valve.

In the present disclosure, the first cooling gas flow ② passing through the recirculation duct 130 is concentrated relative to the exhaust gas flow ① and includes gaseous substances having a high concentration. In the present disclosure, the concentration level may be determined according to a concentration factor and a recirculation rate. For example, in the present disclosure, when the ratio of desorption gas to exhaust gas from an emission source is 15 times (see Table 2 below), the concentration level may be increased up to 300 times as the recirculation rate is varied from 5% to 95%, and when an actual treatment rate of 95% is considered, exhaust gas of 0.25 g/Nm³ may be concentrated to 71.262 g/Nm³, thereby obtaining a concentration level up to 285 times.

The first cooling gas flow ②, alone or after merging with the second cooling gas flow ⑦, is heated by the desorption unit 200 and introduced into the desorption region B of the adsorbing member 10, thereby desorbing the adsorbed contaminant substances so that the desorption gas flow ③ becomes more concentrated. In this way, concentrations of contaminant components in the exhaust gas recirculation flow ④, the first cooling gas flow ②, and the desorption gas flow ③ increase through repetition of adsorption, cooling, and desorption, and after repeated operations, the concentrations reach a predetermined concentration selected by an operator, that is, an equilibrium concentration.

Combustible materials should be managed at or below the minimum explosive limit of the components thereof because there is a risk of fire or explosion when oxygen is present, but in order to secure safety, the combustible materials are preferably managed at a level of 25% of the minimum explosive limit. Here, since the minimum explosive limit varies depending on an ambient temperature, the minimum explosive limit should be set in consideration of the effect of temperature. However, when there is no such risk, it is also possible to set a concentration suitable for condensation, recovery, and oxidation.

In general, when desorption is performed by applying heat, the temperature of the desorption gas should be higher than the adsorption temperature, and the temperature is preferably 100 to 300°C, but the temperature of the desorption gas may vary depending on characteristics of a gaseous substance to be adsorbed and an adsorbing member.

Meanwhile, in the present disclosure, in order to use the desorption gas as a recirculation flow, some or all of the desorption gas may be heat-exchanged.

According to the above mechanism, low-concentration gaseous substances in the exhaust gas flow ① from an initial emission source are introduced into the concentration apparatus, and as the concentration rotor rotates, the gaseous substances are repeatedly subjected to adsorption → desorption → cooling 1 → cooling 2 → adsorption → desorption → cooling 1 → cooling 2, so that the concentration of gaseous substances in the exhaust gas flow may be gradually increased.

In the present disclosure, the concentration of the recirculated exhaust gas is higher than that of the introduced exhaust gas, and since heat is transferred during a desorption process, the temperature and concentration of the cooling gas become higher than in a case where recirculation is not performed. At this time, when exhaust gas having the increased concentration remains in the adsorbing member and then moves to the adsorption region, the exhaust gas may pass through the adsorption region without being adsorbed therein. Although an effect caused thereby is not significant, an additional purge section in which recirculated exhaust gas is not included may be provided in order to eliminate the effect and also lower the temperature. For example, a predetermined region of the adsorbing member 10 adjacent to the secondary cooling region C2 of the concentration apparatus 100 illustrated in FIGS. 2 and 3 may be set as a purge region. Purge air used at this time may be obtained by introducing external air, exhaust gas from an emission source, or purified gas and performing purging. Here, the external air may include clean atmospheric air, air having an adjusted oxygen concentration, or, for gaseous combustible substances, an inert gas such as nitrogen, carbon dioxide, or helium.

In this case, gas flows passing through the cooling region and the purge region may be separated from each other or may merge with each other. Since the gases passing through the cooling region and the purge region may be mixed, heated by a heating unit, and introduced into the desorption region, they do not necessarily need to be separated by a separate partition. That is, since the gas passing through the purge region contains gaseous substances, there are three methods: a method of sending the gas to the desorption flow, a method of sending the gas to the adsorption region, and a method of directly sending the gas to the upstream end of a final treatment unit for gaseous substances, but the method of sending the gas to the desorption flow is most preferable.

When the purge region is used, the gaseous substances may be concentrated while being sequentially switched in the order of adsorption → desorption → cooling → purge → adsorption → desorption → cooling → purge.

In the present disclosure, the concentration ratio of gaseous substances in discharged exhaust gas may be controlled based on a percentage of a flow rate of the recirculation flow ④ relative to a flow rate of the desorption gas flow ③, that is, a recirculation rate. In the present disclosure, the recirculation rate may be controlled according to a concentration of gaseous substances in at least one gas flow among an exhaust gas flow introduced from an emission source into the adsorbing member, a recirculation gas flow introduced into the adsorbing member (cooling region), and a gas flow passing through the adsorbing member. In the present disclosure, the recirculation rate may range from 1% to 99.9%, and preferably may range from 5% to 95%. For example, the recirculation rate may be 5% or more, 10% or more, 15% or more, or 20% or more. In addition, the recirculation rate may be 95% or less, 90% or less, 85% or less, or 80% or less.

For example, the concentration of gaseous substances introduced or recirculated may be designed to be maintained at or below a lower explosive limit (LEL), at which explosion occurs due to introduction of oxygen. Preferably, in the present disclosure, since the temperature of exhaust gas including combustible vapor capable of exploding is not constant, the recirculation flow ④ and the desorption gas flow ③ are preferably controlled at a predetermined ratio in consideration of safety so as to maintain the concentration at 1/4 to 1/5 of the lower explosive limit. For example, referring to Table 1, the lower explosive limit of toluene is 52.2 g/Nm³, and 1/4 thereof is 13.05 g/Nm³. If the concentration is to be controlled to 13.05 g/Nm³ or less, when the concentration is 0.25 g/Nm³ and the recirculation rate is 80%, the concentration may be increased up to 14.263 g/Nm³, and therefore a recirculation rate lower than 80% is preferably set, and when the concentration is 0.5 g/Nm³ and 60% is recirculated, the concentration may be increased up to 14.275 g/Nm³, and therefore a recirculation rate lower than 60% is preferably set.

The apparatus of the present disclosure may include a concentration sensor 150 configured to measure the concentration of gaseous substances in order to control the recirculation rate. FIG. 3 illustrates that a concentration sensor is installed at the upstream end of the adsorption region of the adsorbing member 10 in the exhaust gas flow, but this is exemplary, and the concentration sensor may be installed on an appropriate flow path before the gas is introduced into the adsorbing member 10 of the concentration apparatus. Of course, the concentration sensor may also be installed on the desorption gas flow path, or may be installed on all of the upstream end of the adsorbing member, the desorption gas flow path, and the cooling gas flow path. In addition, an additional concentration sensor 160 may be installed on the gas flow path passing through the adsorbing member, and the downstream concentration sensor 160 is configured to control adsorption efficiency so that a concentration at the downstream end of the adsorbing member does not increase to a predetermined level or higher.

Referring again to FIG. 4, the concentrated gas treatment unit 300 may be a condensation recovery apparatus through cooling and pressurization, a second concentration recovery apparatus using an adsorbent and an absorbent, or an oxidation apparatus such as an RTO, an RCO, or a TO, which removes contaminant gas by combustion. In addition, when the condensation recovery apparatus is used in the present disclosure, a primary treated gas recovered by the condensation recovery apparatus may be supplied again to the adsorption region or the cooling region of the adsorbing member, so that additional purification may be performed.

### Modes of Carrying out the Invention

In the concentrating apparatus of FIG. 1, when the concentration factor was fixed at 12 times and the concentrations (equilibrium concentrations, g/Nm³) of concentrated contaminant components were calculated according to the recirculation rate, the results are shown in Table 1 below (concentration factor: 12 times). At this time, the concentrations (g/Nm³) of the contaminant components according to recirculation rate were calculated while varying the inlet concentration of an exhaust gas flow discharged from an emission source containing oxygen from 0.25 to 1.0 g/Nm³. The concentrations of the contaminant components were calculated as saturation concentrations after repeated iterations. Toluene was assumed as the contaminant component, the LEL was set to 1.27%, and the safety standard was set to 1/4 of the LEL. The temperature effect on the LEL was ignored. In addition, the treatment rate was assumed to be 95%. In Table 1 below, the left column indicates recirculation rates (%), and the right row indicates inlet concentrations (g/Nm³).

**[Table 1]**

| Classification | 0.25 | 0.5 | 0.75 | 1 |
|---|---|---|---|---|
| 95% | 57.013 | 114.025 | 171.038 | 228.050 |
| 80% | 14.263 | 28.525 | 42.788 | 57.050 |
| 60% | 7.138 | 14.275 | 21.413 | 28.550 |
| 40% | 4.763 | 9.525 | 14.288 | 19.050 |
| 20% | 3.575 | 7.150 | 10.725 | 14.300 |
| 5% | 3.013 | 6.025 | 9.038 | 12.050 |
| 0% | 2.863 | 5.725 | 8.588 | 11.450 |

From Table 1 above, it can be seen that, as the recirculation rate increases from 0% to 95%, the equilibrium concentration of toluene gradually increases. Meanwhile, when the respective concentration factors are set to 15 times and 6 times, and the remaining conditions are the same, results of the equilibrium concentration calculation are as shown in Table 2 below (concentration factor: 15 times) and Table 3 below (concentration factor: 6 times).

**[Table 2]**

| Classification | 0.25 | 0.5 | 0.75 | 1 |
|---|---|---|---|---|
| 95% | 71.262 | 142.525 | 213.788 | 285.050 |
| 80% | 17.825 | 35.650 | 53.475 | 71.300 |
| 60% | 8.919 | 17.838 | 26.756 | 35.675 |
| 40% | 5.950 | 11.900 | 17.850 | 23.800 |
| 20% | 4.466 | 8.931 | 13.397 | 17.863 |
| 5% | 3.763 | 7.525 | 11.288 | 15.050 |
| 0% | 3.575 | 7.150 | 10.725 | 14.300 |

**[Table 3]**

| Classification | 0.5 | 1 | 1.5 | 2 |
|---|---|---|---|---|
| 95% | 57.025 | 114.050 | 171.075 | 228.100 |
| 80% | 14.275 | 28.550 | 42.825 | 57.100 |
| 60% | 7.150 | 14.300 | 21.450 | 28.600 |
| 40% | 4.775 | 9.550 | 14.325 | 19.100 |
| 20% | 3.588 | 7.175 | 10.763 | 14.350 |
| 5% | 3.025 | 6.050 | 9.075 | 12.100 |
| 0% | 2.875 | 5.750 | 8.625 | 11.500 |

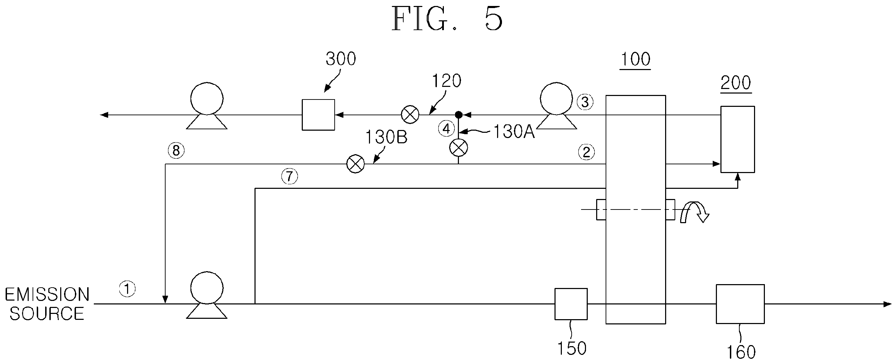

FIG. 5 is a view illustrating a second embodiment including a branching mechanism for desorption gas. Referring to FIG. 5, in addition to the exhaust duct 120 and the first recirculation duct 130A described with reference to FIG. 4, a second recirculation duct 130B is provided. In the present disclosure, the exhaust duct 120 and the recirculation ducts 130A and 130B may include flow rate control units such as, for example, valves and blowing units.

The second recirculation duct 130B may be directly branched from the desorption gas flow ③ or may be branched again from the branched first recirculation duct 130A, and the number of such ducts is not limited. In addition, the second exhaust gas recirculation flow ⑧ may merge at a position before the secondary cooling gas flow ⑦ is branched from the exhaust gas flow ① or at a position after the secondary cooling gas flow ⑦ is branched. When the second exhaust gas recirculation flow ⑧ merges after the secondary cooling gas flow ⑦ is branched, there is an advantage in that the temperature and concentration of gas introduced into the secondary cooling region may be controlled to be lower.

In the present disclosure, the second exhaust gas recirculation flow ⑧ passing through the second recirculation duct 130B is concentrated relative to the exhaust gas flow ① and includes gaseous substances having a high concentration. In the present disclosure, the concentration level may be determined according to the concentration factor and the flow rate ratio of recirculated concentrated gas. In addition, the concentration level may also be determined according to a ratio of the first exhaust gas recirculation flow ④ to the second exhaust gas recirculation flow ⑧. When the second exhaust gas recirculation flow ⑧ is provided as in this embodiment, there may be an advantage in that the treatment capacity of the final treatment unit may be stably maintained by adjusting the amount of gas flow supplied to the final treatment unit, and the concentration of gas introduced into the desorption unit 200 may be prevented from becoming excessively high.

In this embodiment, the concentration of contaminant components in the desorption gas may be increased in such a manner that a portion of the exhaust gas recirculation flow ④ merges into the exhaust gas flow ① and another portion thereof merges into the cooling gas flow ②. Through repetition of adsorption, cooling, and desorption, concentrations of contaminant components in the first exhaust gas recirculation flow ④, the second exhaust gas recirculation flow ⑧, the first cooling gas flow ②, and the desorption gas flow ③ increase, and after repeated operations, the concentrations reach a predetermined concentration selected by an operator, that is, an equilibrium concentration.

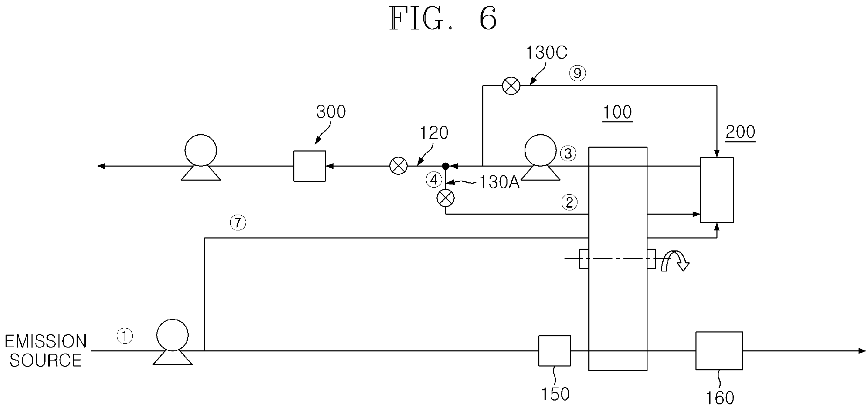

FIG. 6 is a view illustrating a third embodiment including a branching mechanism for desorption gas.

Referring to FIG. 6, in addition to the exhaust duct 120 and the first recirculation duct 130A described with reference to FIG. 4, a third recirculation duct 130C is provided. In the present disclosure, the exhaust duct 120 and the recirculation ducts 130A and 130C may include flow rate control units such as, for example, valves and blowing units.

In the present disclosure, the third exhaust gas recirculation flow ⑨ passing through the third recirculation duct 130C is concentrated relative to the exhaust gas flow ① and includes gaseous substances having a high concentration. In the present disclosure, the concentration level may be determined according to the concentration factor and the flow rate of recirculated concentrated gas. In addition, the concentration level may also be determined according to a ratio of the first exhaust gas recirculation flow ② to the third exhaust gas recirculation flow ⑨.

When the third exhaust gas recirculation flow ⑨ is used as in this embodiment, as in the embodiment of FIG. 4, an increase in the temperature of the cooling gas flow may be controlled and desorption energy may be added due to an increase in an amount of desorption gas, which is advantageous for desorption. The third recirculation duct 130C may be installed at any position in a gas flow path from an outlet of the cooling region to an inlet of the desorption region, but is preferably installed at the upstream end of the desorption unit 200. In addition, when an external hot air flow (waste heat or heated air) is introduced as desorption air, the third exhaust gas recirculation flow ⑨ may be supplied after being mixed with the hot air flow.

The third exhaust gas recirculation flow ⑨ merges with the first cooling gas flow ② and the second cooling gas flow ⑦ and is introduced into the desorption region B of the adsorbing member 10 to desorb the adsorbed gas, so that the desorption gas flow ③ becomes more concentrated. Meanwhile, concentrations of contaminant components in the first cooling gas flow ②, the third exhaust gas recirculation flow ⑨, and the desorption gas flow ③ increase through repetition of adsorption, cooling, and desorption, and after repeated operations, the concentrations reach a predetermined concentration selected by an operator, that is, an equilibrium concentration.

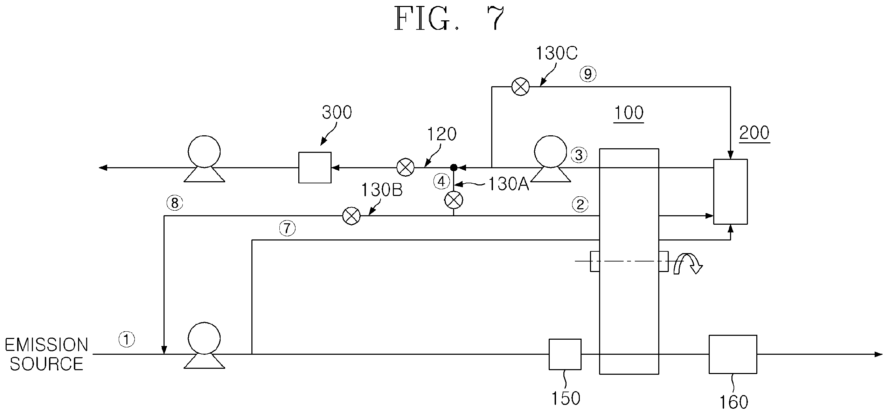

FIG. 7 is a view illustrating a fourth embodiment including a branching mechanism for desorption gas.

Referring to FIG. 7, it can be seen that the exhaust duct 120 and the first recirculation duct 130A described with reference to FIG. 4 are combined with the second recirculation duct 130B and the third recirculation duct 130C. This embodiment may be advantageous in that the temperature of the cooling gas flow may be appropriately controlled, the flow rate of a final treatment unit may be stably maintained, and desorption energy required for desorption may be stably provided.

Meanwhile, although FIGS. 5 to 7 illustrate that the second exhaust gas recirculation flow and/or the third exhaust gas recirculation flow coexist with the first exhaust gas recirculation flow, the second exhaust gas recirculation flow or the third exhaust gas recirculation flow may be provided without the first exhaust gas recirculation flow. In addition, in the present disclosure, two or more of the first exhaust gas recirculation flow, the second exhaust gas recirculation flow, and the third exhaust gas recirculation flow may be provided as recirculation flows.

### [Industrial Applicability]

The present disclosure is applicable to an apparatus for concentrating and treating gaseous substances such as odor, carbon dioxide, and volatile organic compounds.

## Claims

1. A gaseous substance concentration apparatus comprising:
an adsorbing member configured to form a plurality of functional regions for adsorbing, concentrating, and desorbing gaseous substances in exhaust gas discharged from an emission source, the plurality of functional regions of the adsorbing member including an adsorption region, a desorption region, a primary cooling region, and a secondary cooling region;
an exhaust gas flow path through which the exhaust gas is introduced from the emission source into the adsorption region;
a desorption gas flow path through which concentrated gas is discharged from the desorption region;
a first recirculation flow path branched from the desorption gas flow path and passing through the primary cooling region; and a secondary cooling gas flow path passing through the secondary cooling region,
wherein some of the concentrated gas in the desorption gas flow path is introduced into the primary cooling region through the first recirculation flow path.

2. The gaseous substance concentration apparatus of claim 1, wherein some of the concentrated gas in the desorption gas flow path merges into the exhaust gas flow path through a second recirculation flow path.

3. The gaseous substance concentration apparatus of any one of claims 1 and 2, wherein some of the concentrated gas in the desorption gas flow path merges, through a third recirculation flow path, into the desorption gas flow path through which desorption gas is introduced into the desorption region.

4. The gaseous substance concentration apparatus of claim 1, wherein, when a value obtained by dividing a flow rate of the concentrated gas branched into the first recirculation flow path by a flow rate of the concentrated gas in the desorption gas flow path is defined as a recirculation rate, the recirculation rate is controlled according to a concentration of contaminant components in the exhaust gas introduced into the adsorption region.

5. The gaseous substance concentration apparatus of claim 4, wherein at least one of the exhaust gas flow path, the desorption flow path, the first recirculation flow path, and the exhaust flow path includes a concentration sensor.

6. The gaseous substance concentration apparatus of claim 5, wherein the recirculation rate is controlled according to a concentration of contaminant components measured by the concentration sensor.

7. The gaseous substance concentration apparatus of claim 4, wherein the recirculation rate is 1 to 99.9%.

8. The gaseous substance concentration apparatus of claim 1, further comprising:
a desorption unit configured to heat a desorption gas flow supplied to the desorption region,
wherein the desorption unit heats a gas flow flowing through the recirculation gas flow path.

9. The gaseous substance concentration apparatus of claim 1, further comprising:
a desorption unit configured to heat a desorption gas flow supplied to the desorption region,
wherein the desorption unit heats a gas flow flowing through the secondary cooling gas flow path.

10. The gaseous substance concentration apparatus of claim 1, wherein the gas flow flowing through the secondary cooling gas flow path includes external air, exhaust gas, or purified exhaust gas.

11. The gaseous substance concentration apparatus of claim 1, wherein the desorption gas flow path includes a cooling unit.

12. The gaseous substance concentration apparatus of claim 1, further comprising:
a concentrated gas treatment unit,
wherein the concentrated gas treatment unit is a condensation recovery apparatus through cooling and pressurization, a concentration recovery apparatus using an adsorbent, or an oxidation apparatus configured to remove contaminant gas by oxidation.

13. The gaseous substance concentration apparatus of claim 12, wherein a treated gas recovered by the condensation recovery apparatus is supplied to the adsorption region or the cooling region of the adsorbing member.
